DR. GÜNTER WÄCHTERSHÄUSER
PATENTANWALT
Tal 29 · D-8000 München 2

Tel. (089) 293906 u. 220621
Telex: 5214173 Patw-D
Facsimile: (089) 223759
Telegrammadresse:
Waechterpatent

Professional
Representative
before the European
Patent Office

EUROPEAN PATENT OFFICE
Erhardtstraße 27

8000 München 2

September 8, 1988

EPA-EPO-OEB
DG 1
12-09-1988

EPA · EPO · OEB
MÜNCHEN
Empfang bestätigt
Receipt acknowledged
Accusé réception

Re: European Patent Application
No. 88 112 619.7
AMERICAN CYANAMID COMPANY
Our Ref.: EA-6546 (30,605)

In the above-identified European patent application we herewith file a list of corrections according to Rule 88 EPC:

Page 23: Claim "11" should read: Claim "6"
Claim "12" should read: Claim "7"
Claim "13" should read: Claim "8"
Claim "14" should read: Claim "9"

Page 24: Claim "27" should read: Claim "10"

It is kindly requested to insert this list of corrections into the publication documents.

Respectfully submitted,

Günter Wächtershäuser
Patent Attorney

(19) Europäisches Patentamt
European Patent Office
Office européen des brevets

(11) Publication number: **0 303 894**
**A2**

(12) # EUROPEAN PATENT APPLICATION

(21) Application number: 88112619.7

(22) Date of filing: 03.08.88

(51) Int. Cl.4: A61L 2/08 , C08L 23/10 , C08K 5/00

A request for correction of the claims has been filed pursuant to Rule 88 EPC. A decision on the request will be taken during the proceedings before the Examining Division (Guidelines for Examination in the EPO, A-V, 2.2).

(30) Priority: 18.08.87 US 86745

(43) Date of publication of application: 22.02.89 Bulletin 89/08

(84) Designated Contracting States: AT BE CH DE ES FR GB GR IT LI NL SE

(71) Applicant: **AMERICAN CYANAMID COMPANY**
**1937 West Main Street P.O. Box 60**
**Stamford Connecticut 06904-0060(US)**

(72) Inventor: **Webster, Joseph Rene**
**15 Forest Street**
**Closter New Jersey(US)**

(74) Representative: **Wächtershäuser, Günter, Dr.**
**Tal 29**
**D-8000 München 2(DE)**

(54) **Radiation sterilizable composition and articles made therefrom.**

(57) Improved radiation sterilizable compositions and articles can be produced without the use of non-crystalline mobilizing additives, such as mineral oil, if a low crystallinity polymer composition includes a stabilizer system comprising of a hindered phenolic antioxidant and a thioether and/or thioester and the polymer is selected and to have a melt flow initially is below about 5 and finally in the range of from about 12.0 to about 50.

EP 0 303 894 A2

# IMPROVED RADIATION STERILIZABLE COMPOSITION AND ARTICLES MADE THEREFROM

## FIELD OF THE INVENTION

This invention relates to radiation sterilizable compositions and sterilized medical instruments made therefrom. More particularly, it pertains to compositions comprising polymers containing a stabilizer system comprised of a hindered phenolic antioxidant and a thioether and/or thioester which, combined with low initial melt flow and high final melt flow in the polymer, limit embrittlement and maintain a neutral color during sterilization irradiation, without the need to use noncrystalline mobilization additives, such as a mineral oil.

## BACKGROUND OF THE INVENTION

Polymers, such as polyolefins, and especially polypropylene, are widely used to prepare a number of molded articles, such as medical instruments, and especially syringes. These medical instruments are designed to be packaged in sterile containers, opened, used once, and discarded. Conventional ways of sterilizing them, employing steam or ethylene oxide, for example, have the drawbacks of distorting the article because of heat, or requiring the use of somewhat toxic gases. Widely used now are high energy irradiation processes, in which the packaged instrument is exposed to gamma irradiation, e.g., from a cobalt-60 source, or to electron beams, e.g., from a suitable generator. Unfortunately, sterilizing doses, especially of gamma rays, causes degradation of the polymer resulting in a yellow or bright yellow color which is unsuitable for use in the medical profession. Another drawback to the irradiation sterilization of polymers is that this process embrittles most polymers, and this is manifested by a decrease in elongation, noted for example, by breaking when a syringe is buckled and/or bent.

In response to the deficiencies of polymers resulting from sterilization doses of radiation, efforts have been made to introduce polymer stabilizers into the polymeric composition.

Hirao, U.S. 3,940,325, was one of the first to provide gamma radiation sterilized polyolefin articles. The polyolefin compositions of Hirao were stated to remain colorless after gamma irradiation while retaining "practically acceptable physical properties" of melt flow rate and percentage retention of elongation. The was accomplished in Hirao by the use of hindered phenolic stabilizers including, octadecyl 3,5-di-t-butyl-hydroxyhydrocinnamate and/or tetrakis(methylene(3,5-di-t-butyl-4-hydroxyhydrocinnamate))methane alone or in further combination with co-stabilizers such as with dilauryl thiodipropionate, distearyl thiodipropionate, and/or distearyl thiodibutyrate. Although this system minimized yellowing of the polyolefin compound after irradiation, it has since been recognized that the retention of physical properties remained poor, especially as regards embrittlement and loss of elongation.

Another attempt at polymer stabilization during sterilization irradiation is represented by Kelly et al., U.S. 3,537,967. In Kelly et al. the polymer composition comprised a polypropylene having substantial crystalline content, i.e. over 40%, preferably 60% and up to 80 to 90% (measured by x-ray) combined with an ester of thiodipropionic acid. This thioester limited the color change upon irradiation but also left the composition with decreased physical properties. Addition of a hindered phenol along with the thiodipropionic acid was found to cause yellowing of the composition after irradiation, and this was generally aesthetically unacceptable.

Rekers, U.S. 4,460,445 discloses polymer compositions comprising polyolefin polymers and a hindered phenolic antioxidant which provide radiation stable articles. Also mentioned in Rekers is the optional addition of co-stabilizers comprising, i.e. a thiodipropionic acid, a phosphite, etc. The Rekers patent discloses the use of polymers, but makes no mention of the melt flow or the polydispersity of the polyolefin. The point of the Rekers patent is to add a further stabilizer, namely a benzaldehyde acetal. However, compositions such as those disclosed in the Rekers patent still retain the drawback of poor color of the product after irradiation.

Boynton, U.S. 4,282,076, uses treating the polymer to narrow the molecular weight distribution to enhance radiation stability, a so-called controlled-rheology process. He does this by addition of a prodegradant, an antioxidant and optionally a secondary antioxidant. The initial melt flow rate (gm/10 min. at 230 °C) of the polypropylene flake for irradiation was below 5.5 and was increased to a final melt flow, for

example of 27. The molecular weight distribution (Mw/Mn) was disclosed to be about 4. However, it was required to irradiate the polymer samples containing an antioxidant, i.e. a phenol, to produce a polymer composition for injection molding, and thereafter sterilize by irradiation. Without the prior irradiation step, which is undesirable, articles injection molded from the same melt flow resins were brittle and molded in slow cycles. Although improved physical properties were obtained, embrittlement on storage, color development and severe odor development after compounding and during storage both remained as drawbacks.

Semi-crystalline polymers made by controlled-rheology processes stabilized for irradiation sterilization were disclosed in Williams et al., U.S. Patent 4,274,932. These rely on the addition of a non-crystalline mobilizing additive to the semi-crystalline controlled-rheology polymer. Embrittlement, especially after long term storage, is minimized by employing a non-crystalline mobilizing additive, typically an oil or grease, preferably a hydrocarbon oil or phthalic ester oil. This is said to increase the free volume of the polymer and therefore lowers the density of the polymer. The polymers used for these purposes are disclosed to have a crystalline content of 20-90% with 40-80% being preferred. The patent also contemplates the use of a narrow molecular weight distribution (Mw/Mn), i.e. Q value, polymer of less than 9.0, the preferred Q being between 2.0 and 4.0. These polymer compositions, none of which have any reported melt flow values, are believed to be represented commercially by Hercules PRO-FAX® 511, which uses a polypropylene with a maximum melt flow of 12. They represent the present state of the art. They have a significant drawback, however, and that is their substantial content of mobilizing additive, e.g., 5% by weight of mineral oil, which tends to migrate to the surface and extrude with lower thermal oxidative stability.

Attempts have been made to improve such compositions. For example, Williams et al., in European Patent Application EPO 0087294, dated August 31, 1983, further incorporates a heterocyclic hindered amine polymeric stabilizer in compositions containing the mobilizing additive. This combination is said to provide synergistic improvement to the polymer's stability during irradiation, but the patent states that thioethers and/or thioesters, i.e. dilauryl thiodipropionate, should not be used because they reduce the synergistic effect of the combination of stabilizing agents. In any event, the problem criticized in EPA '294 with exuding mineral oil and lowering thermal oxidative stability remain as substantial drawbacks.

It can be seen from the foregoing that the stabilization of polymers, especially polypropylene homopolymers, against gamma radiation is not a simple function of adding different phenolics, thioesters and/or thioethers, phosphorous compounds and hindered amines to the resin. The state of the resin matrix in the composition appears tó be important as the stabilizers, especially for initial and long term storage stability. Although not a great deal of attention has been paid to this factor until now, it has been discovered that the resistance of the polymer to cobalt 60 gamma irradiation is strongly influenced by the crystallinity of the injection molded article, initial polydispersity index (Q), initial melt flow, and melt flow changes during visbreaking, before irradiation. In one manifestation, changes in mold temperature have a profound effect on radiation resistance. This suggests that in the state of the art systems using, for example, phenolic and thioester stabilizer packages and a polypropylene resin of a particular final melt flow, specifically 11.9, if the degree of crystallinity in the molded article is too high, then optimum stability is sacrificed. As is known, initial melt flow has been below about 5 in such systems. However, until now it has not been recognized that, unless the final melt flow is above 12.0 preferably above about 15 and up to about 50, the physical properties of composition stabilized with such packages dramatically drop off, after irradiation. It seems that if the crystallinity of the molded article can be kept below 50%, resistance against gamma irradiation is maintained above 3.5Mrads and even as high as 5.0Mrads at a dose rate of 1.5Mrads per hour. This represents a vast improvement over the state of the art, probably because higher crystallinity has always been inherent. Furthermore, it has also been found that combinations of hindered phenol and thioesters and/or thioethers and, optionally, hindered amines, as stabilizer packages, for some reason not clear at this time, provide a lower degree of crystallinity over a broad range of injection molding temperatures. Thus, they are conducive to the retention of physical properties, assuming that the need to maintain initial crystallinity below 50% is still recognized to be critical. Moreover, although it is not critical, the compositions should be injection molded under conditions selected to maintain a low degree of crystallinity before irradiation. For molding, the melt temperatures should range from 230 to 240 °C and the mold temperatures below 65 °C preferably between 24° and 38 °C.

## SUMMARY OF THE INVENTION

According to the present invention, there are provided improved, radiation sterilizable compositions of the type comprising (a) a semi-crystalline polymer having a narrow molecular weight distribution; an

effective, radiation stabilizing amount of (b) a hindered phenolic stabilizer, alone or in further combination with (c) a phosphite; and an effective co-stabilizing amount of (d) an organic thioester or a mixture thereof, the improvement comprising using as said polymer a polypropylene having an initial melt flow of below about 5 and a final melt flow of from about 15 to 50 and maintaning the composition substantially free of a non-crystalline mobilizing additive, said composition being moldable at a melt temperature in the range of from about 200°C to about 260°C and a mold temperature of below about 65°C into parts having a crystallinity of below about 50%.

When used herein and in the appended claims, the term "substantially free" of the mobilizing additive means less than 100 parts per million based on the polymers. It should be recognized that small amounts, e.g., less than 100 ppm of mineral oil are conventionally present as a residue from the peroxide/mineral oil mixture used to increase the melt flow and narrow molecular weight distribution during controlled-rheology polymer formation.
These small amounts do not interfere with the results provided herein.

A further principal aspect of this invention comprises a medical instrument, e.g., a syringe, sterilized by gamma irradiation, and injection molded from the improved composition as defined above.

Among the preferred features of the invention are compositions in which the hindered phenolic antioxidant (a) comprises from about 0.01 to about 0.2 part by weight per 100 parts by weight of said polymer, more preferably from about 0.1 to about 0.2 parts by weight per 100 parts by weight of said polymer. The phosphite (b) comprises from 0 to about 0.5 parts by weight per 100 parts by weight of the polymer and preferably from about 0.1 to about 0.3 parts by weight per 100 parts by weight of said polymer. A preferred amount of thioester, thioether or mixture thereof (c) comprises from about 0.1 to about 2.0 parts by weight per 100 parts by weight of the polymer, and more preferred from about 0.1 to about 1.0 parts by weight per 100 parts by weight of the polymer.

Also contemplated as embodiments are compositions as above defined which optionally include (e) an effective amount of an organic ultraviolet radiation stabilizer for said composition, (f) an effective amount of an optical brightener or a mixture of (e) and (f).

The polymers contemplated for use in the present invention are controlled-rheology polymers, e.g., those derived from a singly unsaturated acyclic hydrocarbon, or mixture or copolymers thereof, especially preferably polypropylene, and most preferably one which has, initially, a melt flow of below about 5 grams per 10 minutes at 230°C according to ASTM D-1238. Most preferably the initial melt flow will be in the range of 0.01 to 1. It is critical that use be made of polymers, e.g., polypropylenes, having a final melt flow of between about 12 to about 50, and preferably between about 15 to about 30. Further, the compositions of the present invention should mold to parts having a crystalline content of below about 50% and preferably below about 45%. Most preferrably the crystalline content will be below about 40%. Crystallinity is measured by standard techniques, well known to those skilled in this art, for example, by density calculations from measurements, by x-ray analysis, and the like. Crystallinity is controlled by techniques, for example, by quench temperature, denucleants, nucleants, shear induced molecular weight distribution and by the addition of specific additives, such as phenolics, phosphites, amines, thioesters, thioethers, pigments, dyes, and the like. As will be seen hereinafter, the invention preferably involves judiciously selecting stabilizer package components which interact with the polyolefins in a way so as to provide parts in which crystallinity is below 50%, always, instead of the 55-70% inherently produced using prior art stabilization packages and techniques.

In preferred features, the hindered phenolic antioxidant compound (a) comprises a compound of the formula

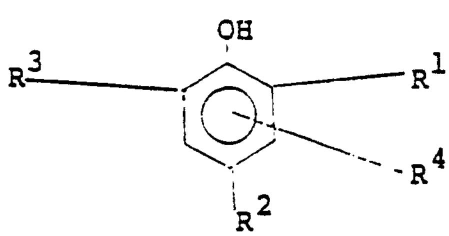

wherein $R^1$, $R^2$, $R^3$ and $R^4$ are substituents on phenolics which are known in the art to provide oxidative and chemical stabilization of polyolefins. Among these special mention is made of (i) a 3,5-di-t-butyl-4-hydroxyphenyl dihydrocinnamic acid ester of a long chain alcohol, (ii) a 3,5-di-t-butyl-4-hydroxyphenyl dihydrocinnamic acid ester of pentaerythritol, (iii) 1,3,5-tris(4-t-butyl-3-hydroxy-2, 6-dimethylbenzyl)-s-triazine-2,4,6(1H, 3H, 5H)trione, or a mixture of any of (i), (ii) and (iii). Most preferred is (iii) 1,3,5-tris(4-tbutyl-3-hydroxy-2, 6-dimethyl-benzyl)-s-triazine-2,4,6-(1H,3H,5H)-trione. Many of these are 25 commercially available.

The use of a phosphite (b) in the composition is optional, but is preferred, because it limits discoloration caused by the hindered phenolic antioxidant and provides for long term storage stability after irradiation. Among the phosphites available, special mention is made of diphosphites and triphenyl phosphites.

Co-stabilizer (d), which is essential, preferably comprises $C_{12}$ to $C_{18}$ diesters of thiodipropionic acid, such as distearyl thiodipropionate, dilauryl thiodipropionate, dimyristyl thiodipropionate, or a mixture of any of the foregoing with dilauryl thiodipropionate being most preferred.

In the embodiments which optionally contain an ultraviolet radiation stabilizer, these are preferrably a hindered benzoate compound or a hindered amine compound, and especially the compounds known as CYASORB® UV-2908, (3,5-di-tert-butyl-4-hydroxybenzoic acid hexadecyl ester) and/or CYASORB® UV-3346 (poly(6-morpholino-5-triazine-2,4-diyl)2,2,6,6-tetra-methyl-4-piperidyl)imino))-hexamethylene((2,2,6,6,-tetramethyl-4-piperidyl)imino)). Especially suitable are hindered benzoates combined with phosphites. At this time, the combination of properties is most advantageously provided by a composition as above defined which comprises (a) semi-crystalline polypropylene having a narrow molecular weight distribution having a Q in the range of about 3 to about 6, provided by a resin starting melt flow of 0.01 to 1.0 providing a final melt flow in the range of about 12.0, preferably 15, to about 50; (b) from about 0.05 to about 0.3 parts by weight per 100 parts by weight of (a) of 1,3,5-tris(4-t-butyl-3-hydroxy-2,6-dimethylbenzyl)-s-triazine-2,4,6 (1H, 3H, 5H)-trione; (c) from about 0.2 to about 0.6 parts by weight per 100 parts by weight of (a) of a bis-(2,6-di-tert-butyl-4-octadecyloxy-carbonylethyl-phenyl) pentaerythritol diphosphite; (d) from 0.01 to about 0.2 parts by weight per 100 parts by weight of (a) of dilauryl thiodipropionate or distearyl thiodipropionate; and (e) from 0 to about 0.5 parts by weight per 100 parts by weight of (a) of 3,5-di-tert-butyl-4-hydroxybenzoic acid hexadecyl ester or poly(6-morpholino-5-triazine-2,4-diyl)2,2,6,6-tetramethyl-4-piperidyl)imino)hexamethylene((2,2,6,6-tetramethyl-4-piperidyl)imino).

## DETAILED DESCRIPTION OF THE INVENTION

The semi-crystalline polymers having a narrow molecular weight distribution used in the improved compositions of this invention are commercially available and they also can be made in ways known to those skilled in this art.

The polymer may be derived from singly unsaturated hydrocarbons, such as polyoledins, e.g. polyethylene of low and high density, optionally cross-linked, polypropylene, polybutene-1, polyisobutylene, polymethylbutene-1 and polymethylpentene-1; mixtures of the homopolymers mentioned above, such as mixtures of polypropylene and polyethylene, polypropylene and polybutene-1, polypropylene and polyisobutylene; or copolymers of the monomers on which the homopolymers mentioned above are based, such as ethylene/propylene copolymers, propylene/butene-1 copolymers, as well as terpolymers of ethylene and propylene with a diene, such as hexadiene, di-cyclopentadiene or ethylideneorbornene. The preferred polymer is polypropylene. The polypropylene can be prepared, for example, by using a conventional Ziegler-Natta catalyst, or one of the more recently developed "high yield" catalysts, such as Montedison Mitsui catalysts and the so-called S.H.A.C., or super high activity catalysts.

As used herein, the molecular weight distribution, polydisperisity index (Q), or the polymer is defined by the ratio of the weight average molecular weight to the number average molecular weight. In accordance with the present invention, in narrow molecular weight polymers, such ratio should not be greatere than 11.0, preferably no greater than 9.0 and most preferably no greater than 6.0. The minimum ratio, by definition is 1.0. As a practical matter, the ratio is at least about 2.0, and, in most cases, the ratio is on the order of from 3.0 to 6.0.

The desired ratios are obtained by using controlled rheology techniques, which are well known. If, for example, a polymer having a broad molecular weight distribution is melt blended with a small amount of an organic peroxide and extruded, the molecular weight distribution will be narrowed.

Conventional GPC analysis of molecular weight can be carried out to determine if the distribution is within the "narrow range".

The hindered phenolic stabilizers used in the improved composition of the present invention are commercially available or can be made in ways known to those skilled in the art.

The phenolic antioxidant stabilizer is incorporated into the polymer in a stabilizing amount, said stabilizer generally being present in an amount of from about 0.01 to 1 part by weight and preferably from

about 0.05 to 0.3 parts by weight. Representative examples of suitable phenolic antioxidant stabilizers include, but are not limited to alkylated phenols, such as 2,6-di-t-butyl-4-methylphenol; 2,6-di(alpha-methylbenzyl)4-methylphenol; 4-hydroxymethyl-2,6-di-t-butylphenol; butylated hydroxyanisole; 2-t-butyl-1,4-benzendediol; octadecyl 3,5-di-t-butyl-4-hydroxybenzyl phosphonate; bis-phenols, such as 2,2′-methylene-bis(4-methyl-6-tbutylphenol); 2,2′-methylenebis(4-ethyl-6-t-butylphenol); 4,4′-butylidenebis(6-t-butyl-m-cresol); 4,4′-methylenebis(2,6-di-t-butylphenol); 2,2′-methylene-bis(4-methyl-6-nonylphenol); 2,2′-methylenebis[6-(1-methylcyclohexyl)p-cresol); 4,4′-thiobis(6-t-butyl-o-cresol); thiobisdiethylenebis(3,5-di-t-butyl-4-hydroxy)hydrocinnamate; N,N′-hexamethylenebis(3,5-di-t-butylbutyric acid, 3,3-bis(3-t-butyl-4-hydroxyphenyl) ethylene ester; 2,2′-ethylidene-bis(4,6-di-t-butylphenol), and polyphenols such as 1,3,5-tris-(4-t-butyl-3-hydroxyl-2,6-dimethylebenzyl)-1,3,5,-triazine-2,4,6,-(1H, 3H, 5H)-trione; tetrakis(methylene(3,5-di-t-butyl-4-hydroxyhydrocinnamate)methane; 1,3,5-trimethyl-2,4,6-tris(3,5,-di-t-butyl-hydroxybenzyl)-benzene); tris(3,5,-di-t-butyl-4-hydroxybenzyl)isocyanurate; 3,4-di-t-butyl-4-hydroxyhydrocinnamic acid triester with 1,3,5-tris(2-hydroxyethyl)-s-triazine-2,4,6-(1H, 3H, 5H)trione; 1,1,3-tris(2-methyl-4-hydroxy-5-t-butylphenyl)-butane). The preferred phenol antioxidant stabilizers are (i) a ester of a long chain alcohol, (ii) a 3,5-di-t-butyl-4-hydroxyphenyl dihydrocinnamic acid ester of pentaerythritol, (iii) 1,3,4,- tris(4-t-butyl-3-hydroxy-2,6-dimethylbenzyl)-s-triazine-2,4-(1H, 3H, 5H)-trione, or a mixture of any of (i), (ii) and (iii), and most preferred is 1,3,5-tris-(4-t-butyl-3-hydroxy-2,6-dimethylbenzyl)-s-triazine-2,4, 6(1H, 3H, 5H)trione.

The normal fate of phenolic antioxidants in polypropylene exposed to high energy radiation is a yellow discoloration of the resin.

Discoloration of the resin by the phenolic stabilizer can be limited in the present invention through the optional employment of a phosphite in the polymer composition or limiting the concentration of a more potent phenolic antioxidant, e.g., CYANOX® 1790 Antioxidant. Representative examples of the phosphites include but are not limited to pentaerythritol disphosphites, including bis(2,6-di-tert-butyl-4-methoxycarbon ylethyl-phenyl)pentaerythritol diphosphite bis(2,6-di-tert-butyl-4-n-dodecyloxycarbonylethyl-phenyl)-pentaerythritol diphosphite, bis(2,6-di-tert-butyl-4-octadecyloxycarbonyl-phenyl)pentaerythritol diphosphite, bis(2,6-ditert-butyl-4-methoxycarbonyl-phenyl)pentaerythritol phosphite, bis(2,6-di-tert-butyl-4-octadecyloxycarbonylethyl-phenyl)pentarythritol diphosphite and mixtures thereof, tri-phenyl phosphite including tris(2,4-di-tert-butyl-4-methtert-butyl phenyl phosphite) and the like. The combination of the phenolic and the phosphite controls the retention of a natural color while maintaining the polymer's physical properties after irradiation. These phosphites are commercially available or can be made in ways known to those skilled in the art. See, for example, European Patent Application 186628-A.

Stabilization of the polymer for irradiation is provided in accordance with this invention by use of a stabilizer package comprising the phenolic antioxidant in combination with a costabilizing amount of an organic thioester, thioether or mixture thereof. Representative examples of the latter include, but are not limited to distearyl thiodipropionate, dilauryl thiodipropionate, dimyristyl thiodi propionate and mixtures thereof. The preferred organic thioester and/or thioether for use in this invention is dilauryl thiodipropionate. The organic thioester stabilizer is added to the polymer in an amount from about 0.1 to about 2.0 parts by weight, preferably, 0.1 to 1.0 parts by weight per 100 parts by weight of the polymer.

An optional additive for the radiation sterilizable polymer of the present invention is an ultraviolet radiation stabilizer. Representative examples of ultraviolet radiation stabilizers include, but are not limited to hindered benzoate compounds, polymeric hindered amine compounds or mixtures thereof. These compounds are commercially available or can be made by methods known to one skilled in the art. Of those, preferred compounds commercially available are the hindered benzoate light stabilizer CYASORB® 2908, 3-5-di-tert-butyl-4-hydroxybenzoic acid hexadecyl ester, and the hindered amine light stabilizer CYASORB® 3346, poly(6-morpholino-5-triazine-2,4-diyl)2,2,6,6-tetramethyl-4-piperidyl)imino) hexamethylene((2,2,6,6-tetramethyl-4-piperidyl)imino).

Another optional additive to the radiation sterilizable polymer of the present invention is an optical brightener. Representative examples of such optical brightners include a coumarin derivative, such as Leucopure® EGM or a stilbene derivative, such as Blancophor® R.

The improved composition, containing some or all of the above described additives, can be employed to produce an article which is to be sterilized by procedures known in the art. As representative examples of such articles, not intending to limit the invention in any way, are syringes, tube assemblies, sutures, tissue culture flasks, needles, package film, hospital non-woven textile gowns, etc.

Sterilization of articles produced from the composition of the present invention can be achieved by subjecting the polymer, with the above identified additives incorporated therein, to a sterilizing amount of high energy radiation. The high energy radiation can be provided by any one of a number of sources, including cobalt-60, high energy electrons and x-rays. In general, the sterilization dosages are on the order of from 0.5 to 5.0 megarads, with the typical dose being 1.0 to 3.5 megarads, for example, at dose rates of

0.2 to 5 megarads per hour. It is to be understood that higher doses can be employed but are generally not necessary, or even desirable.

Also preferred to maintain retention of elongation of an article injection molded from the composition of the present invention after irradiation is to control the mold temperature employed in forming the article. The retention of elongation increases slightly from 24° to 38° C, at all irradiation dosages tested, then drops off somewhat between 38° C and 65° C.

It has been found that by using the teachings of the present invention, the sterilized or irradiated polymer compositions comprise articles which not only possess an aesthetic natural color but also retain the physical properties of the polymer. Moreover, the retention of elongation and color of a treated article produced from the present invention is maintained over storage periods of six months or longer.

## DESCRIPTION OF THE PREFERRED EMBODIMENTS

The following examples illustrate the present invention but are not intended to limit the claims in any manner whatsoever. In the following examples the following Trademarks, Tradenames and abbreviations have the following meanings:

CYANOX® 2777 Antioxidant - 1 part CYANOX® 1790 antioxidant and 2 parts Mark 2112® phosphite
CYANOX® 1790 Antioxidant - 1,3,5-tris(4-t-butyl-3-hydroxy-2,6-dimethylbenzyl)-s-triazine-2,4,6-(1H, 3H, 5H)-trione
CYASORB® 2908 Light Stabilizer - (3,5-di-tert-butyl-4-hydroxybenzoic acid hexadecyl ester)
CYASORB® 3346 Light Stabilizer - poly(6-morpholino-5-triazine-2,4-diyl(2,2,6,6-tetramethyl-4-piperidyl)-imino)hexamethylene-(2,2,6,6-tetramethyl-4-piperidyl)imino)
DLTDP - dilauryl thiodipropionate
DSTDP - distearyl thiodipropionate
CGA-198® Phosphite - bis-(2,6-di-tert-butyl-4-octadecyloxy carbonylethyl phenyl)pentaerythritol diphosphite
Leucopure EGM® Optical Brightener - a coumarin derivative
Mark 2112® Phosphite - tris(2,4-di-tert butyl phenyl)phosphite

## EXAMPLE 1

(a) A low melt flow semi-crystalline polypropylene (Hercules PRO-FAX® 6501) (M.F. = 3-4) is treated with an organic peroxide in the melt, to cleave the high molecular weight fraction and to reduce the polydispersity, Q, to a value below 6. The melt flow of the final polymer is the range of 15-50. The actual procedure to prepare a controlled rheology polymer suitable for use in this invention is as follows: Mix the following:

| Compound | Parts by Weight |
|---|---|
| Polypropylene powder | 100 |
| CYANOX® 1790 Antioxidant | 0.03 |
| DSTDP | 0.3 |
| CYASORB® 3346 Light Stabilizer | 0.1 |
| calcium stearate | 0.05 |

Mix with a small amount of 2,5-methyl-(2,5-bis-t-butylperoxy) hexane and mineral oil (less than 100 parts million), first by dry blending and then melt blending in a 3/4 inch Haake extruder at 232° C at 100 rpm. The Final Melt Flow in this instance is 21.

The extruded composition is chopped into pellets, shaken in a polyethylene bag and injection molded 24-48 hours after extrusion. The conditions for molding were 230-250° C with 1000 psi forward pressure and 150 psi back pressure. The mold temperature was 38° C. The specimens comprise 60 mil plaques. They are subjected to crystallinity measuring and elongation testing, by pulling a microtensile specimen die cut from the 60 mil plaques parallel to the flow lines. The crystallinity is 42% The pulling rate is two inches per minute at a 2 inch gauge length. They are also subjected to irradiation sterilization using a 3 million curie

cobalt-60 source. The results are as follows:

Results:

Retention of Elongation: 72% after 3.5Mrads at 1.5Mrads/hour

EXAMPLE 2

The procedure of Example 1 is exactly repeated, except that the mold temperature is raised to 65° C. The crystallinity of the molded articles is 54%. The molded article is then irradiated. The results are as follows:
Retention of Elongation: 20% at 3.5 Mrads at 1.5Mrads/hour

EXAMPLE 3

The procedure of Example 1 is exactly repeated, except that the mold temperature is lowered to 24° C. The crystallinity of the molded article is 39%. The molded article is then irradiated. The results are as follows:
Retention of Elongation: 100% at 3.5Mrads of 1.5Mrads/hour

If the procedure of Example 2 is repeated with a 0.5 initial melt flow resin (Hercules PRO-FAX 6801) then retention of elongation is 100%. A lower initial melt flow resin gives best results.

The data in the foregoing Examples demonstrates that when initial crystallintiy is below 50%, (Examples 1 and 3) a dose rate of 1.5 (Mrads/hour) to a total sterilization dose of 3.5Mrads, will provide a high degree of retention of elongation. Even if the initial crystallinity is above 50%, Example 2, there is some retention of original elongation.

In a further demonstration of the advantages of the invention, the compositions of Examples 1-3 were exposed to a sterilizing dose of 3.5Mrads of gamma radiation, but at three different dose rates, namely 1.5, 3.0 and 5.0Mrads/hour. The results showed the compositions retained more than 50 percent of the original elongation after a total dosage of 3.5Mrads even after the highest dose rate, 5.0Mrads/hour. This has industrially important advantages in terms of the throughout of high speed sterilization lines.

EXAMPLE 4

The following formulation is prepared by following the procedure of Example 1.

| Compound | Parts by Weight |
|---|---|
| Polypropylene powder (MF3.0) | 100 |
| CYANOX® 1790 Antioxidant | 0.1 |
| CGA-198® phosphite stabilizer | 0.2 |
| CYASORB® UV-3346 Light Stabilizer | 0.3 |
| DSTDP | 0.3 |
| calcium stearate | 0.05 |
| Final Melt Flow - 17.0 | |

Results:

Initial Yellowness Index (Y.I) = 6.9
After 2.5Mrads at 1.5Mrads/hour dose rate: Y.I = 13.5
After 3.5Mrads at 1.5Mrads/hour dose rate: Y.I = 12.5
After 5.0Mrads at 1.5Mrads/hour dose rate: Y.I = 12.7

Percent Retention Original Elongation:

2.5Mrads sample: 77%
3.5Mrads sample: 43% (yellowness index of 1.6)
5.0Mrads sample: 13% at 5.0 mrad/hour, 3.5 mrads total dosage

The results indicate that color and physical properties are efficiently retained in accordance with this invention at sterilization dosages of gamma radiation.

## EXAMPLE 5

The following formulation is prepared by following the procedure of Example 1.

| Compound | Parts by Weight |
|---|---|
| Polypropylene powder (MF 3.0) | 100 |
| CYANOX® 1790 Antioxidant | 0.1 |
| CGA-198® phosphite stabilizer | 0.2 |
| DLTDP | 1.0 |
| calcium stearate | 0.05 |
| Leucopure EGM® optical brightener | 0.0001 |
| Final Melt Flow - 18-19 | |

Results:

Initial Y.I = -2.6
After 2.5Mrads at 1.5Mrads/hour: Y.I = 2.0
After 2.5Mrads at 1.5Mrads/hour: Y.I = 4.3
After 5.0Mrads at 1.5Mrads/hour: Y.I = 7.8

Percent Retention of Original Elongation:

2.5Mrads sample: 98%
3.5Mrads sample: (yellowness Index 3.1) at 5 mrad/hour, 3.5 mrad total dosage 88%
5.0Mrads sample: 42%

The results indicate that color and physical properties are efficiently retained in accordance with this invention at sterilization dosages of gamma radiation.

## EXAMPLE 6

The following formulation is prepared by following the procedure of Example 1.

| Compound | Parts by Weight |
|---|---|
| Polypropylene powder (MF 3.0) | 100 |
| CYANOX® 1790 Antioxidant | 0.1 |
| DLTDP | 1.0 |
| calcium stearate | 0.05 |
| Leucopure EGM® optical brightener | 0.0001 |
| Final Melt Flow - 21.5. | |

Results:

Initial Y.I = 0.4
After 2.5Mrads at 1.5Mrads/hour: Y.I = 6.0
After 3.5Mrads at 3.5Mrads/hour: Y.I = 8.0

Percent Retention of Original Elongation:

After 2.5Mrads at 1.5Mrads/hour: 91%
After 3.5Mrads at 1.5Mrads/hour: 81%
After 5.0Mrads at 1.5Mrads/hour: 10%

The results indicate that color and physical properties are efficiently retained in accordance with this invention at sterilization dosages of gamma radiation. It is noteworthy that in comparing Example 6 with Example 5, a small amount of the phosphite stabilizer is effective to enhance the retention of elongation to an even greater degree, especially at the highest total dosage.

## EXAMPLE 7

The following formulation is prepared by following the procedure of Example 1.

| Compound | Parts by Weight |
|---|---|
| Polypropylene powder (MF 3.0) | 100 |
| CYANOX® 1790 Antioxidant | 0.03 |
| DLTDP | 1.0 |
| calcium stearate | 0.07 |
| Leucopure EGM® optical brightener | 0.01 |
| Final Melt Flow 20 | |

Results:

Initial Color: Y.I = -3.6
After 2.5Mrads at 1.5Mrads/hour: Y.I = -1.0
After 3.5Mrads at 1.5Mrads/hour: Y.I = +1.3
After 5.0Mrads at 1.5Mrads/hour: Y.I = +3.6

| Percent Retention of Original Elongation: | | |
|---|---|---|
| | 38° C (mold) | 24° C (mold) |
| 2.5Mrads sample: | 84% | 71 |
| 3.5Mrads sample: | 79% | 61 |
| 5.0Mrads sample: | 81% | 75 |

The results indicate that color and physical properties are efficiently retained in accordance with this invention at sterilization dosages of gamma radiation.

## EXAMPLE 8

The following formulation is prepared by following the procedure of Example 1.

| Compound | Parts by Weight |
|---|---|
| Polypropylene powder (MF 3.0) | 100 |
| CYANOX® 1790 Antioxidant | 0.03 |
| DSTDP | 0.3 |
| CYASORB® UV-3346 Light Stabilizer | 0.1 |
| calcium stearate | 0.07 |
| Final Melt Flow 21 | |

Results:

Initial Color: Y.I = + 7.4
After 2.5Mrads at 1.5Mrads/hour: 8.4
After 3.5Mrads at 1.5Mrads/hour: 9.2
After 5.0Mrads at 1.5Mrads/hour: 10.7

| Percent Retention of Original Elongation: | |
|---|---|
| | 24° C (mold) |
| 2.5Mrads sample: | 100% |
| 3.5Mrads sample: | 100% |
| 5.0Mrads sample: | 42% |

After 18 months in dark storage, the 2.5 Mrad sample, retained 74% of original elongation.

The results indicate that color and physical properties are efficiently retained in accordance with this invention at sterilization dosages of gamma radiation.

EXAMPLE 9

The following formulation is prepared by following the procedure of Example 1.

| Compound | Parts by Weight |
|---|---|
| Polypropylene powder (MF 3.0) | 100 |
| CYANOX® 1790 Antioxidant | 0.05 |
| DSTDP | 0.15 |
| CYASORB® 3346 Light Stabilizer | 0.10 |
| calcium stearate | 0.07 |
| Final Melt Flow 20 | |

Results:

Initial Yellowness = 8.7
The dose rate was 1.5 Mrads/hour, which is three times that of traditional medical facilities.
After 2.5Mrads Y.I = 9.1
After 3.5Mrads Y.I = 9.1
After 5.0Mrads Y.I = 9.1

Percent Retention of Original Elongation:

2.5Mrads sample: 100%
3.5Mrads sample: 93%
5.0Mrads sample: 26%
These results indicate that 5.0Mrads irradiation is attainable with this composition based on least squared analysis of the effective dose rate versus physical property retention of elongation, especially if a fractional starting melt flow resin would have been used for chemically cracking the polymer to a 20 melt flow polymer. The practical effect of this is to increase long term sterility without destroying the medical device.

The foregoing patents, publication and test methods are incorporated herein by reference.

Many variations will suggest themselves to those skilled in this art in light of the above description. For example, instead of CYANOX® 1790 antioxidant, there can be used octadecyl 3,5-di-ti-butyl-4-hydroxy-hydrocinnamate or the corresponding tetrakis methane analog. Instead of dilauryl thiodipropionate and distearyl thiodipropionate there can be used dimyristyl thiodipropionate. All such obvious variations are within the full intended scope of the appended claims.

## Claims

1. An improved radiation sterilizable composition of the type comprising

(a) a semi-crystalline polymer having a narrow molecular weight distribution; and an effective, radiation stabilizing amount of

(b) a hindered phenolic stabilizer, alone or in further combination with

(c) phosphite; and an effective, co-stabilizing amount of

(d) an organic thioester or thioether or a mixture thereof, said improvement comprising using as said polymer one having a initial melt flow of below about 5 and a final melt flow of from above about 12.0 to 50 and maintaining said composition substantially free of a non-crystalline mobilizing additive, said composition being moldable at a melt temperature in the range of from about 200°C. to about 260°C. and a mold temperature of below about 65°C. into parts having a crystalinity of below about 50%.

2. A composition as defined in Claim 1 wherein said polymer is derived from a singly unsaturated acyclic hydrocarbon, or mixtures or copolymers thereof.

3. A composition as defined in Claim 2 wherein said polymer is polypropylene.

4. A composition as defined in Claim 1 wherein said hindered phenolic stabilizer comprises from about 0.01 to 0.1 part by weight per 100 parts by weight of said polymer.

5. A composition as defined in Claim 1 which also includes an effective amount of

(e) an organic ultraviolet radiation stabilizer for said composition,

(f) an optical brightener, or a combination of (e) and (f)

11. A composition as defined in Claim 3 wherein said polypropylene is a controlled rheology polypropylene.

12. A composition as defined in Claim 1 wherein said hindered phenolic stabiliser 9b) comprises a compound of the formula

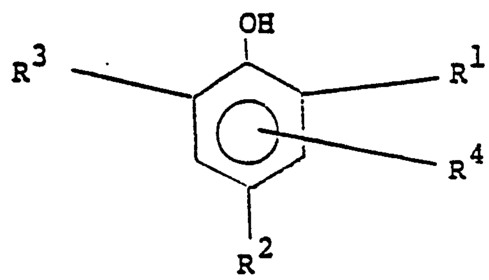

wherein $R^1$, $R^2$, $R^3$ and $R^4$ are substituents on phenolics which are known in the art to provide oxidative and chemical stabilization of polyolefins.

13. A composition as defined in Claim 1 wherein said organic thioester or thioether (d) comprises distearyl thiodipropionate, dilauryl thiodipropionate, dimyristyl thiodipropionate or a mixture of any of the foregoing.

14. A composition as defined in Claim 1 consisting essentially of:

(a) a semi-crystalline polypropylene having a narrow molecular weight distribution with a Q in the range of àbout 3 to about 6, a melt flow in the range of about 12.0 to about 50;

(b) from about 0.05 to 0.3 parts by weight per 100 parts by weight of (a) of 1,3,5-tris(4-t-butyl-3-hydroxy-2,6-dimethlbenzyl)-s-triazine-2,4,6-(1H, 3H, 5H)trione;

(c) from about 0.2 to about 0.6 parts by weight per 100 parts by weight of (a) of a bis-(2,6-tert-butyl-4-octadecyloxycarbonylethylphenyl)pentaerythritol diphosphite.

(d) from 0.01 to about 0.2 parts by weight per 100 parts by weight of (a) of dilauryl thiodipropionate or distearyl thiodipropionate; and

(e) from 0 to about 0.5 parts by weight per 100 parts by weight of (a) of poly(6-morpholion-5-triazine-2,4-diyl(2,2,6,6-tetramethyl-4-piperidyl)imino)hexamethylene((2,2,6,6-tetramethyl-4-piperidyl)imino).

27. An article of manufacture sterilized by gamma irradiation and made by injection molding improved composition as defined in Claim 1.